# EUROPÄISCHE PATENTSCHRIFT

(11) **EP 0 635 340 B1**
(45) Veröffentlichungstag und Bekanntmachung des Hinweises auf die Patenterteilung: **26.03.1997**
(21) Anmeldenummer: 94109054.0
(22) Anmeldetag: 13.06.1994
(51) Int. Cl.: B26D 1/11, B26D 3/20, B26D 11/00

(54) **Schneidautomat**
Automatic cutting device
Dispositif automatique de coupe

(30) Priorität: 16.06.1993 DE 9308956 U
(43) Veröffentlichungstag der Anmeldung: 25.01.1995
(73) Patentinhaber: Schumann, Jörg, D-35274 Kirchhain (DE)
(72) Erfinder: Schumann, Jörg, D-35274 Kirchhain (DE)
(74) Vertreter: Olbricht, Karl Heinrich, Dipl.-Phys.

(56) Entgegenhaltungen:
- EP-A- 0 535 998
- DE-A- 2 923 559
- DE-A- 3 026 118
- DE-A- 3 623 165
- DE-A- 4 024 615
- DE-B- 1 252 858
- FR-A- 2 072 311
- FR-A- 2 661 350
- FR-A- 2 666 534
- GB-A- 2 139 078
- US-A- 2 721 594
- DATABASE WPI Derwent Publications Ltd., London, GB; AN 93-402492 (50) & SU-A-1 777 762 (SVERD BREAD COMBINE) 30. November 1992

## Beschreibung

Die vorliegende Erfindung betrifft ein Schneidgerät gemäß dem Oberbegriff von Anspruch 1.

Unter Schneiden versteht man bekanntlich das Zerteilen von Material mit einem Werkzeug. Ist dies ein Messer, so drängt ein scharfer Keil das Schneidgut auseinander. Beim sogenannten Druckschnitt verformt sich meist die Oberfläche, in die das Messer eindringt; weichere Werkstoffe werden dabei stark gequetscht. Durch eine Bewegungskomponente in Schneidrichtung entsteht ein z.B. tangentialer Zugschnitt, der kleinere Schneidkräfte erlaubt und infolge geringerer Verformung glattere Flächen schaffen kann.

Lebensmittel, beispielsweise Käse, aber auch pastöse Massen wie Gasbeton und viele andere plastische Materialien schneidet man seit langem entweder mit (Säge-)Messern oder mit Drähten, die mittels Schneidrahmen, bogenförmigen Halterungen u. dgl. von oben nach unten durch einen mehr oder minder steifen Masseblock geführt werden. Um möglichst glatte Schnittflächen zu erzielen, überlagert man der vertikalen Bewegung eine im wesentlichen horizontale Hin-und Herbewegung, wie etwa aus DE 846 374 C1 hervorgeht. Dazu wurden auch Kreuzanordnungen von an einem Kasten gehalterten bzw. geführten Schneiddrähten mit Schwing- oder Pendelantrieb vorgeschlagen (vergl. DE 30 49 144 C2), wobei blockförmige Stücke erzeugt werden.

Speziell bei der Herstellung von Kuchen ist es oft erforderlich, das auf einem Backblech erzeugte Backwerk in Einzelportionen zu zerteilen. Maschinell setzt man hierfür herkömmlich scheibenförmige Scherenmesser ein, die einen Träger nach Art eines Scherengitters mit außenliegenden, in stabartigen Rollenträgern sitzenden Gelenkbolzen haben. Dabei ist jeweils ein langlochgeführter Bolzen gegenüber einem rundlochgelagerten Bolzen beweglich; infolgedessen läßt sich das Scherengitter zusammendrücken bzw. strecken. Zum Fixieren der Rollen in gewünschtem Abstand verspannt man z.B. mittels Flügelmuttern jeweils langlochgeführte Bolzen mit den zugehörigen Rollenträgern.

Derartige Scherenmesser müssen auf die jeweilige Blechgröße eingestellt werden, wofür sog. Hamburger- und Euro-Abmessungen in mehreren Abstufungen üblich sind. Beim Übergang von einem Schnitt in Längsrichtung des Bleches zu einem Schnitt in Querrichtung ist jeweils eine Neueinstellung unerläßlich. Häufigeres Verstellen führt aber zu hohem Verschleiß an den Gelenken der Schermesser. Diese laufen ohnehin nicht besonders spurtreu, weil sie von Hand ausgerichtet werden müssen und vor allem bei Gebäck mit grob-strukturierter Oberfläche wie Streuselkuchen zu Ausweichbewegungen neigen. Nachteilig ist ferner, daß die Messer in der leicht deformierbaren Scherenanordnung allgemein lediglich das Voreinschneiden einer Schneidspur ermöglichen, die deshalb regelmäßig mit einem Messer nachgefahren werden muß. Wegen des wiederholten Einstellens, Zentrierens und Nachschneidens sind die Schneidarbeiten mit solchen Vorrichtungen insgesamt sehr arbeits- und zeitaufwendig.

Relativ umständlich ist auch die Handhabung von Maschinen, mit denen auf Backblechen befindlicher Kuchen nacheinander in zwei Etagen geschnitten wird, nämlich unten in Längs- und oben in Querrichtung. Das nach dem ersten Schnitt notwendige Herausnehmen, Hochheben und um 90° versetzte Einschieben des Backblechs in die obere Etage muß von Hand ausgeführt werden und kann den Arbeitsablauf beträchtlich verzögern, naturgemäß abhängig vom Geschick des/der Bedienenden.

Die in FR-A-2 666 534 (D1) dargestellte Schneidvorrichtung besitzt ein Gestell mit zwei parallel verlaufenden, horizontal geneigten Längsträgern, einen entlang diesen gleitgeführten U-förmigen Schneidkopf mit einer Anzahl motorisch angetriebener Schneidmesser sowie einen bodenseitig angeordneten Träger zur Aufnahme des Schneidguts. Jedes Schneidmesser besteht aus zwei Einzelmessern, die während des Schneidvorgangs eine Hin- und Bewegung ausführen und dabei gegenläufig aneinander entlanggleiten. Die Schneidflächen der Messerpaare sind schräg ausgerichtet, wobei die Schnittbenen der Messer parallel zu den Längsträgern verlaufen. Der Träger besteht aus einzelnen schrägstehenden Platten, die in äquidistanten Abständen jeweils parallel zur Neigung der Längsträger ausgerichtet sind. Für den Schneidvorgang wird das zu schneidende Fleischstück auf die bogenförmigen Oberkanten der Trägerplatten aufgelegt. Anschließend wird der Messerkopf von Hand oder mittels eines automatischen Antriebs entlang der Gleitschienen durch das Fleisch hindurch und wieder nach oben geführt. Das Fleisch wird dabei in gleichmäßig dicke Scheiben zerteilt.

Die in SU-A1-1 777 762 (D2) offenbarte Schneidvorrichtung für Bisquitböden, Torten u.dgl. hat eine Anzahl motorisch angetriebener Folienmesser, die parallel und in gleichmäßigen Abständen in einem vertikal verfahrbaren Rahmen eingespannt sind, wobei benachbarte Messer jeweils eine Gegenbewegung ausführen. Das zu schneidende Produkt wird mit einer Platte auf einen Tisch unterhalb des Messerrahmens aufgelegt und durch Absenken des Messerrahmens in Streifen zerteilt. Anschließend wird die Platte von Hand aus der Vorrichtung entnommen und mit dem Produkt uni 90° gedreht, um in derselben oder einer weiteren Schneidvorrichtung einen Schnitt in Querrichtung auszuführen.

Es ist ein wichtiges Ziel der Erfindung, mit möglichst einfachen Mitteln einen verbesserten, vor allem auch für klebrig-feuchtes Schneidgut wie Kuchen wirtschaftlich einsetzbaren Schneidautomaten zu schaffen. Er soll bei hoher Arbeitsgeschwindigkeit sicheres Schneiden über längere Zeiträume ermöglichen und die Schneidvorgänge schonend sowie mit größerer Genauigkeit als bisher ausführen.

Dieses Ziel wird durch ein Schneidgerät nach Anspruch 1 erreicht. Vorteilhafte Ausgestaltungen sind Gegenstand der Ansprüche 2-20.

Bei einem Schneidgerät für namentlich auf Blechen transportiertes nachgiebiges Schneidgut wie Kuchen, flach ausgeformtes Creme- und Sahnegebäck o.dgl., mit einem Gestell, das eine Halterung für eine Anzahl motorisch angetriebener Messer trägt, die parallel zueinander von oben nach unten durch das Schneidgut geführt und nach dem Schnitt aufwärts herausgezogen werden, sieht die Erfindung vor, daß sich oberhalb einer Förderstrecke, auf der die Bleche mit Schneidgut ein- und ablaufen, wenigstens zwei Messerstationen hintereinander befinden, die für den Schnitt in wenigstens zwei Richtungen jeweils einen Satz parallel angeordneter Messer aufweisen. Dieser übersichtliche Aufbau gewährleistet, daß die Behandlung des Schneidgutes auf der Förderstrecke erfolgt, also keine Zwischen-Umladung erforderlich ist. In den Messerstationen ist das eingelaufene Blech während des Schneidvorgangs stationär gehalten. In jeder Messerstation wird in vorgegebener Richtung geschnitten; nach dem letzten Schnitt wird das Blech ohne besondere Handhabung abgefördert, beispielsweise durch Überschieben auf einen Tisch. Die Bearbeitung ist außerordentlich rasch und genau. Während der nach Auslösung unter einer Schutzhaube automatisch erfolgenden Scheid- und Transportvorgänge ist kein Eingriff von Hand notwendig, so daß sich die Bediener auf das Beschicken und Abnehmen der Bleche konzentrieren können.

Erfindungsgemäß besteht jeder Messersatz aus einer Anzahl von abstandsgleich angeordneten Messerpaaren, deren Einzelmesser während eines Schnittes zueinander gegenläufig hin und her bewegbar sind. Die Messer dringen also überaus schonend in das Schneidgut ein, wodurch Belagsverschiebungen vermieden werden. Der gegenläufig ziehende Schnitt bewirkt nicht nur gleichmäßige Schnittflächen mit geringer Verformung des Schneidgutes, sondern auch besonders große Laufruhe des Gerätes, da sich die dynamische Unwucht weitestgehend ausgleicht.

Gemäß Anspruch 2 sind die Messerstationen in einem gemeinsamen Trägerrahmen angeordnet, mit je einem Antrieb versehen und wahlweise gleichzeitig oder unabhängig betätigbar. Die gleichzeitige Betätigung ist vorteilhaft, wenn der erste Schnitt auf einem ersten Blech bereits durchgeführt und dieses weiterbefördert wurde, während ein zweites Blech einlief, so daß nun beim erneuten Absenken des Trägerrahmens in der einen Station schon der zweite Schnitt ausgeführt wird, während auf dem nachgeschobenen Blech in der anderen Station der erste Schnitt erfolgt. Diese Arbeitsweise trägt wesentlich zur Verkürzung der Bearbeitungszeiten bei. Konstruktiv ist es günstig, wenn laut Anspruch 3 die Antriebe der Messerstationen Exzenterantriebe mit Exzenterwellen sind. Diese Antriebsanordnung ist mechanisch einfach und betriebszuverlässig.

Anspruch 4 sieht vor, daß die Messerführungen in dem Trägerrahmen aneinander anschließend winkelversetzt gehaltert sind, bevorzugt unter 90° derart, daß ein Messersatz parallel zur Blech-Längsrichtung und ein Messersatz quer dazu steht. Dabei können die Messerführungen laut Anspruch 5 arm Trägerrahmen abstandsgleich befestigt sein.

Von besonderem Vorteil ist die Ausgestaltung nach Anspruch 6, wonach die Messerführungen in wenigstens zwei Messerrahmen aneinander anschließend winkelversetzt gehaltert sind, bevorzugt unter 90° derart, daß ein Messersatz parallel zur Blech-Längsrichtung und ein Messersatz quer dazu steht. Die Messerrahmen sind zudem lösbar mit dem Trägerrahmen verbunden und können damit aus dem Trägerrahmen herausgenommen werden, beispielsweise zu Wartungszwecken oder um abgenutzte Messersätze rasch zu wechseln. Darüberhinaus kann die Größe der geschnittenen Kuchenstücke ganz nach Bedarf verändert werden, indem Messerrahmen mit unterschiedlichen Messeranordnungen verwendet werden. Ein einfacher und rascher Wechsel ist problemlos möglich.

Laut Anspruch 7 sind die Messerführungen an den Messerrahmen vorzugsweise abstandsgleich befestigt und die ihnen jeweils gegenüberliegend zugeordneten Messerführungen bevorzugt auf wenigstens zwei Wellen, verschieblich angeordnet. Der Abstand zwischen den in den Messerführungen gelagerten Einzelmesser eines Messerpaares kann somit vergrößert werden. Verschmutzungen, die sich während des Schneidens zwischen den Messern angesammelt haben, lassen sich leicht und problemlos entfernt. Gemäß Anspruch 8 weisen die Messer Rückenausleger in Form einer Lasche auf, die jeweils in ein U-Profil, z.B. aus Polyethylen, eingreifen. Der konstruktive Aufwand für den Antrieb der Messer ist erheblich reduziert, wobei die Messer einer Bewegungsrichtung exakt synchron bewegt werden.

In der Ausbildung nach Anspruch 9 ist der Trägerrahmen mit einem regelbaren Hub-/Senkantrieb zwischen einer oberen Bereitschafts- und einer unteren Arbeits-Stellung verfahrbar, z.B. entlang zwei oder vier Vertikal-Führungen. Das Eintauchen der Messer in den zu schneidenden Kuchen kann optimal an dessen Beschaffenheit angepaßt und nach Bedarf vollautomatisch gesteuert werden, so daß die Oberfläche bzw. das Aussehen der geschnittenen Stücke nicht verändert wird. Vorteilhaft ist der Trägerrahmen laut Anspruch 10 jenseits der oberen Bereitschaft-Stellung zur besonders bequemen Reinigung in eine seitliche oder höhere Wartungs-Position bewegbar.

Für die untere Arbeits-Stellung kann gemäß Anspruch 11 eine bodennah wirksame Begrenzung vorgesehen sein, z.B. in Form eines Trägerrahmen-Anschlags oder einer Zeitsteuerung für den Hub-/Senk-Antrieb, die außerdem eine Verweildauer für die untere Stellung festlegt. Diese sog. Reitzeit gewährleistet dank der hin- und hergehenden Messer eine gute Zerteilung auch im Bodenbereich, ohne daß die Messer den Blechboden berühren. Infolgedessen bleiben sie besonders lang scharf, was ein beträchtlicher Fortschritt gegenüber herkömmlichen Vorrichtungen ist, deren Messer nach Art von Stanzen beim Auftreffen auf das Blech rasch abstumpfen. Dadurch wird außerdem der übliche Lärm und auch Abrieb vermieden, der unvermeidlich in das Schneidgut gelangte.

Die Weiterbildung von Anspruch 12 besteht darin, daß die Förderstrecke insbesondere elektronische Steuermittel zum positionsgerechten Einführen des jeweils zu bearbeitenden Blechs, sein Festhalten während eines Arbeitstaktes und sein Weiterfördern aufweist. Hierbei kann laut Anspruch 13 auf der Förderstrecke eine Einrichtung - etwa ein Rollenschalter oder eine Lichtschranke zum Erkennen eines Stollens an einem Transportband - vorhanden sein, das z.B. mittels einer Magnetbremse anhaltbar und während des Arbeitstaktes arretierbar ist. Auf diese Weise ist ein automatisch genaues Zuführen und Positionieren der Bleche gewährleistet, die während des Schneidvorgangs sicher gehalten sind.

Anspruch 14 sieht eine Zweihand-Bedienung für das Auslösen des Anlaufs der Förderstrecke und des Arbeitstaktes vor, was maßgeblich zur Arbeitssicherheit beiträgt. Zusätzlich kann der Antrieb der Messersätze laut Anspruch 15 erst bei Berührung des Schneidgutes einschaltbar und/oder beim Verlassen des Schneidgutes abschaltbar sein, was Energie spart und den Verschleiß an bewegten Teilen mindert.

Gemäß der wichtigen Ausgestaltung von Anspruch 16 gleiten die Einzelmesser jedes Paares mit ihren Schneiden selbstschärfend aneinander entlang. Bevorzugt sind sie laut Anspruch 17 schwach auswärts gewölbt, wobei die Schneiden einen inneren, insbesondere planen Reibungsbereich aufweisen, der zugleich eine Abdichtung bewirkt. Vorteilhaft tragen die Messer nach Anspruch 18 zumindest an ihren äußeren Gleitflächen eine Antihaftbeschichtung, z.B. einen Belag aus Polyfluortetraethylen (PFTE = Teflon), wodurch das Schneidgut nicht an den Messern haftet. Diese Maßnahmen tragen auch wesentlich zu hoher Standzeit und niedrigem Wartungsaufwand bei.

Man erzielt einen besonders sauberen Schnitt gemäß Anspruch 19 dadurch, daß die einander zugewandten Einzelmesser jeweils benachbarter Messerpaare gegenläufig angetrieben werden. Dies verhindert ein paralleles Hineindrücken und Klemmen der Messer am Schneidgut, so daß die geschnittenen Streifen beim Hochfahren der Messer nicht mitgerissen und vom Blech abgehoben werden.

Laut Anspruch 20 können die Messerstationen beheizbare Führungen für die Messer aufweisen, die dadurch auf höhere Temperatur kommen, wodurch die Reibung beim Schnitt vor allem in fetthaltigem Material wesentlich reduziert und teilweise auch dem Anhaften von Kuchenresten wirksam vorgebeugt wird.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnung. Darin zeigen:
- Fig. 1: eine schematisierte Seitenansicht eines Schneidgerätes,
- Fig. 2a: eine Seitenansicht einer Förderstrecke,
- Fig. 2b: eine Draufsicht auf die Förderstrecke von Fig. 2a,
- Fig. 2c: eine Frontansicht der Förderstrecke von Fig. 2a,
- Fig. 3a: eine Draufsicht auf einen Trägerrahmen,
- Fig. 3b: eine Seitenansicht des Trägerrahmens von Fig. 3a,
- Fig. 4a: eine Stirnansicht, teilweise im Schnitt, einer Messerstation in Bereitschaftsstellung,
- Fig. 4b: eine Stirnansicht, teilweise im Schnitt, einer Messerstation in Arbeitsstellung,
- Fig. 5: eine Teil-Schnittansicht eines Doppelmessers mit Exzenter-Antrieb,
- Fig. 6: eine schematische räumliche Darstellung einer anderen Ausführungsform eines Trägerrahmens mit Messerrahmen,
- Fig. 7a: eine Teil-Schnittansicht des Trägerrahmens von Fig. 6 in geöffneter Stellung,
- Fig. 7b: eine Teil-Schnittansicht des Trägerrahmens von Fig. 6 in geschlossener Stellung,
- Fig. 8: eine Teil-Seitenansicht eines Exzenterantriebs und
- Fig. 9: eine Draufsicht auf den Trägerrahmen von Fig. 6.

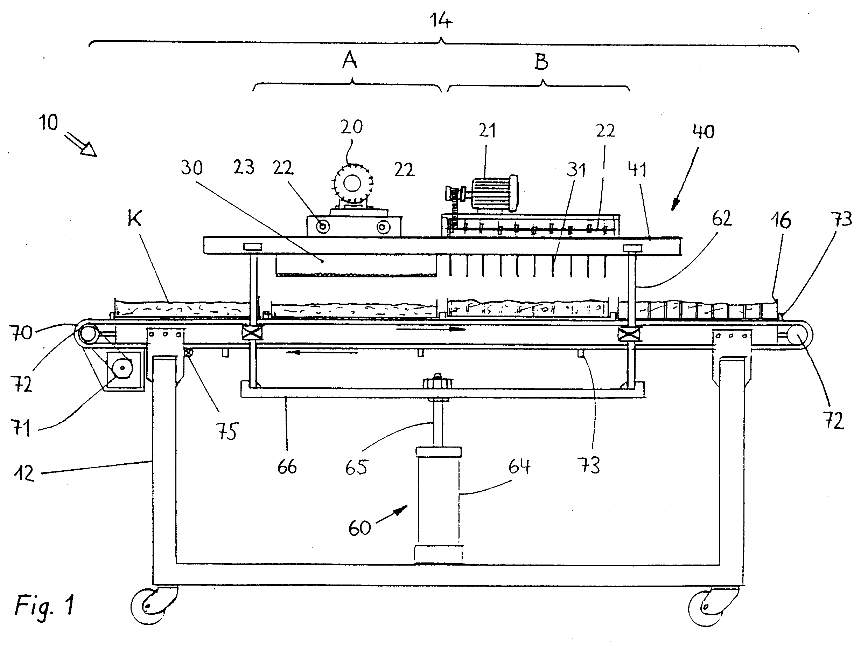

Das in Fig. 1 schematisiert dargestellte Schneidgerät ist allgemein mit 10 bezeichnet. Es hat ein Gestell 12 in Verbindung mit einer Förderstrecke 14, auf der Bleche 16 in Pfeilrichtung heran- und abgeführt werden.

Oberhalb der Förderstrecke 14 befindet sich eine Halterung 40 in Form eines Trägerrahmens 41 mit zwei Messerstationen A, B. In diesen befindet sich je ein Messersatz 30 bzw. 31, die rechtwinklig zueinander angeordnet sind. Jeder Messersatz 30, 31 weist eine Anzahl von Messerpaaren 32 auf, die in Messerführungen 43, 44 verschieblich gelagert sind und deren Einzelmesser während eines Schneidvorgangs gegenläufig aneinander entlanggleiten, wozu je ein Exzenter-Antrieb 20, 21 mit Exzenterwellen 22 vorhanden ist. Die Anordnung ist so getroffen, daß auch die einander zugewandten Einzelmesser benachbarter Messerpaare 32 gegenläufig angetrieben werden.

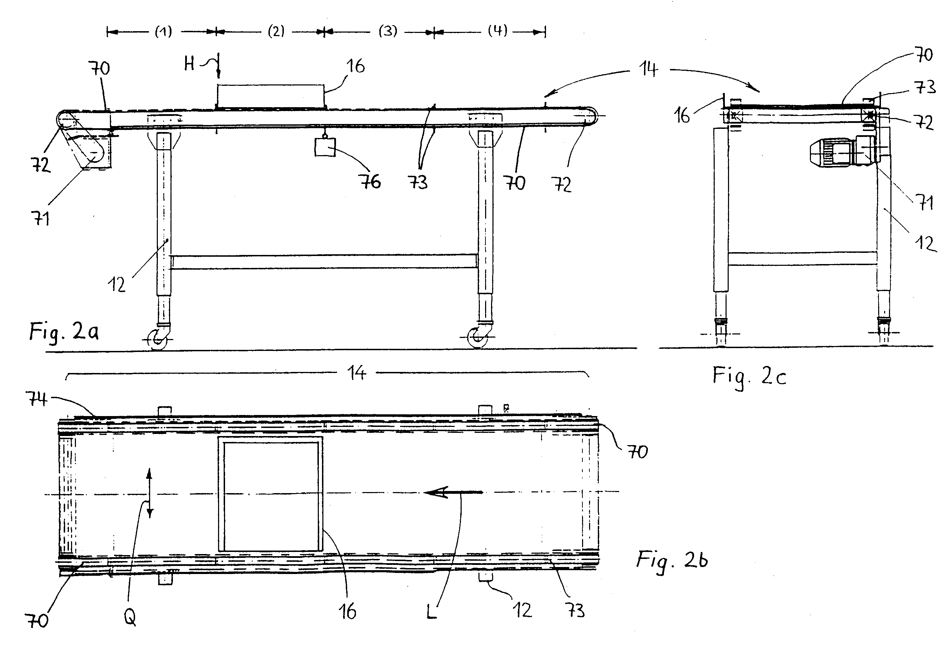

Einlaufende Bleche 16 werden, wie in Fig. 2a dargestellt, in einer Halteposition H angehalten, z.B. mittels einer (nicht dargestellten) Magnetbremse. Geeignet ist beispielsweise die Anordnung einer Lichtschranke 75, um jeweils Bandstollen 73 eines über Rollen 72 laufenden Transportbandes 70 abzutasten oder der Bandantrieb 71 wird einfach über einen von den Bandstollen 73 betätigten Rollenschalter 76 abgeschaltet.

Jedes Kuchenblech 16 hat drei Begrenzungswandungen und ist an einer vierten Seite offen, wie aus Fig. 2a, 2b hervorgeht. In der dort gezeigten Transportphase hat das Kuchenblech 16 eine zweite Position (2) erreicht, von der es (weiter nach rechts) in eine Stellung (4) gelangt. Von dort laufen die Bleche 16 jeweils auf einen (nicht gezeichneten) Abstelltisch.

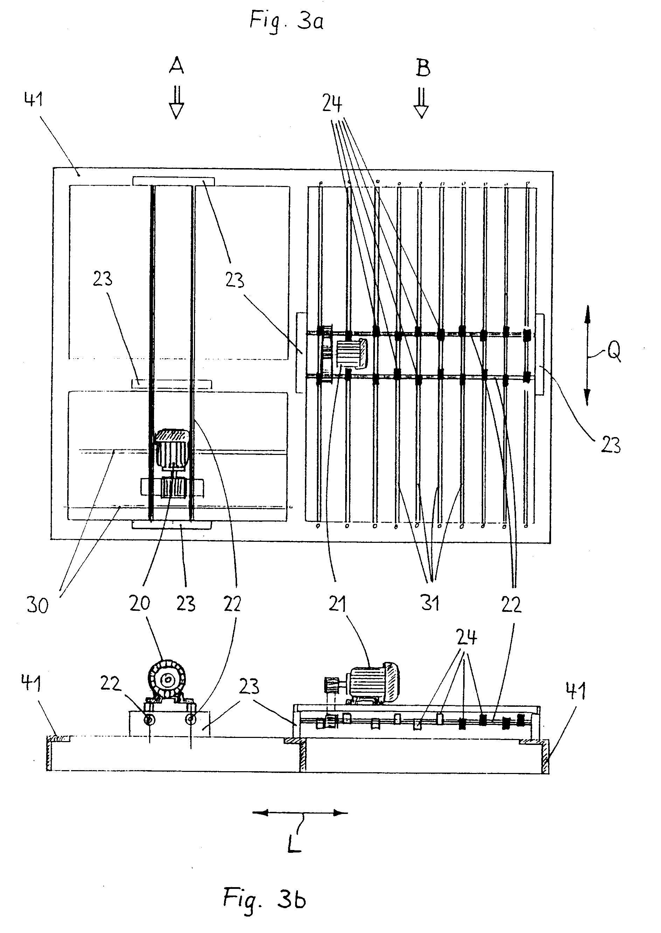

Fig. 3a und 3b zeigen den Trägerrahmen 41 mit den beiden Messerstationen A, B. In Längsrichtung L verläuft der Messersatz 30 der Station A, den der Exzenterantrieb 20 über die Exzenterwellen 22 bewegt, während der Messersatz 31 in der Station B mit dem gleichartig ausgebildeten Exzenterantrieb 21 über seine Exzenterwellen 22 in Querrichtung Q bewegbar ist. Die Exzenterwellen 22 sind in Lagerplatten oder auf Lagerböcken 23 gelagert.

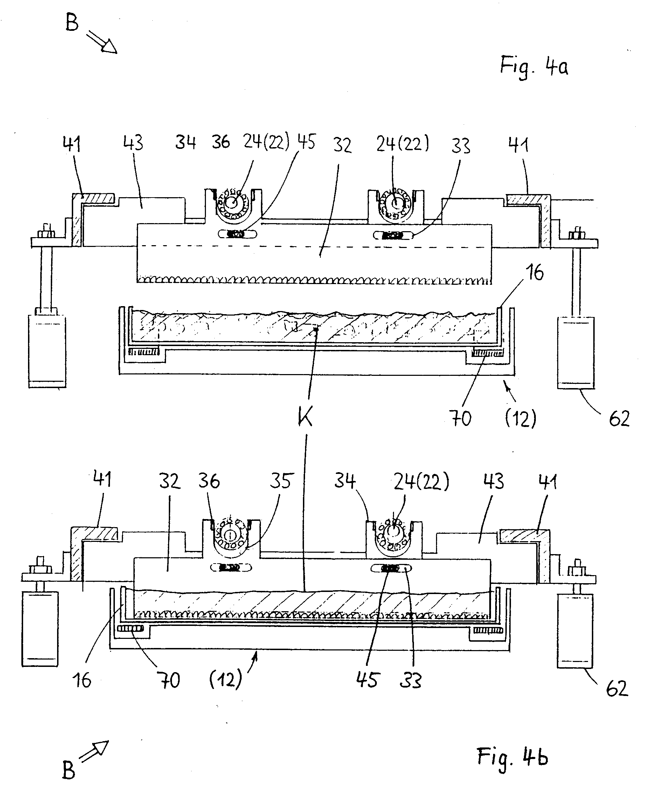

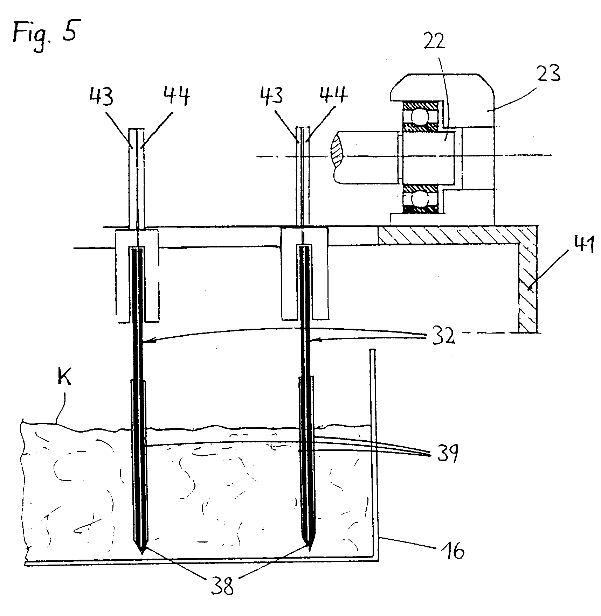

Die Messerpaare 32 weisen Langlöcher 33 auf und werden jeweils in Messerführungen 43, 44 geführt, die in festen Rasterabständen am Trägerrahmen 41 verschraubt sind (Fig. 5). Zwischen den Messerführungen 43, 44 befinden sich Gleitsteine 45, die in die Langlöcher 33 eingreifen. Um die Messer hin und her zu bewegen sind Rückenausleger 34 mit Lageröffnungen 35 vorgesehen, zwischen denen wälzgelagerte Exzenter 24, z.B. kugelgelagerte Exzenterbuchsen, eingreifen (Fig. 4a, 4b). In den Lageröffnungen befestigte Laufbacken 36 vermindern die Reibung und damit den Verschleiß.

Man erkennt in Fig. 5, daß die Messerpaare 32 im oberen Bereich zwischen ihren bevorzugt durch eine Wärmebehandlung schwach auswärts gewölbten Einzelmessern etwas Abstand haben, während außen schräge, zusammen keilförmige Schneiden 33 in einem inneren, planen Reibungsbereich aneinander selbstschärfend sowie abdichtend entlanggleiten. Die Messer 30, 31 reichen in der unteren Arbeits-Stellung bis nahe an den Boden eines Kuchenblechs, ohne ihn zu berühren.

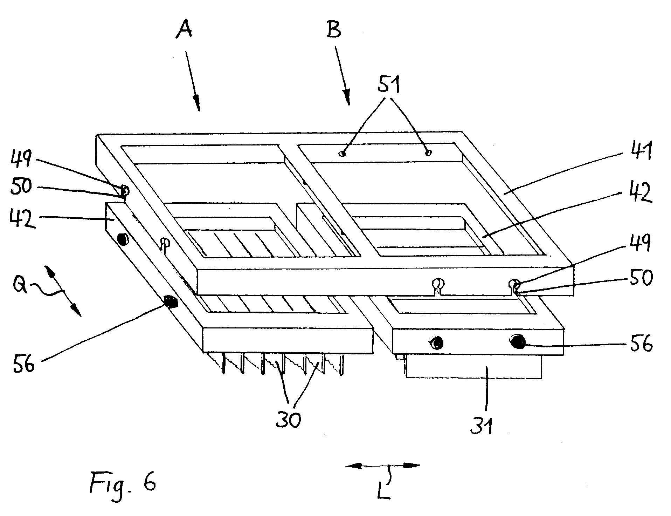

Um einen Wechsel der Messer 30, 31 und/oder einen Wechsel der Schnittrastergröße zu ermöglichen sind in einer anderen Ausführungsform, schematisch dargestellt in Fig. 6, die Messerführungen 43, 44 in zwei getrennten Messerrahmen 42 aneinander anschließend winkelversetzt angeordnet, so daß der Messersatz 30 parallel zur Längsrichtung L und der Messersatz 31 quer dazu steht. Die Messerrahmen 42 sind herausnehmbar in dem Trägerrahmen 41 gehaltert`

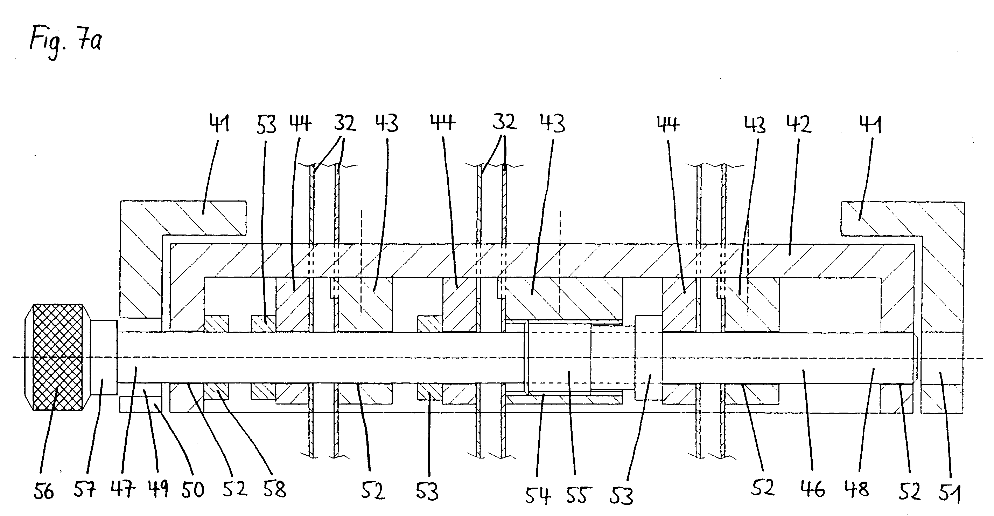

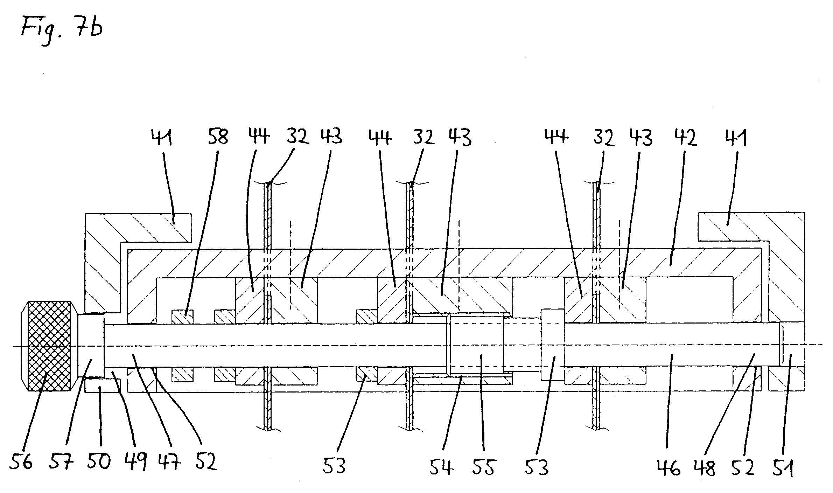

Um ein Herausnehmen der Messerrahmen 42 aus dem Trägerrahmen 41 in einfacher Art und Weise zu ermöglichen sind auf einer Längsseite L und einer Schmalseite Q in den Trägerrahmen 41 schlüssellochförmige Aussparungen 49 mit nach unten offenen Einführöffnungen 50 eingearbeitet. Auf den jeweils gegenüberliegenden Seiten befinden sich fluchtend zu den Aussparungen 49 angeordnete Bohrungen 51 (Fig. 7).

Die Messerrahmen 42 besitzen, wie in Fig. 7a, 7b dargestellt, in Rasterabständen befestigte Messerführungen 43 (Festbacken) und vorzugsweise zwei durch Bohrungen 52 ragende Wellen 46, die mit ihren Enden 47, 48 in die Aussparungen 49 bzw. in die Bohrungen 51 des Trägerrahmens 41 eingreifen, wobei der Durchmesser der Bohrungen 51, 52 und der Einführöffnungen 50 nur geringfügig größer ist als der Durchmesser der Welle 46. Auf dem Ende 47 der Welle 46 ist ein Knauf oder Drehgriff 56 aufgeklebt. Dieser besitzt einen Hals 57, dessen Durchmesser deutlich größer ist als der einer Einführöffnung 50 und geringfügig kleiner als der Durchmesser der Aussparung 49,

Auf den Wellen 46 sind die Messer 30, 31 mit ihren Langlöchern 33 und die gegenüber den Festbacken 43 angeordneten Messerführungen 44 (Losbacken) mit (nicht dargestellten) Bohrungen verschieblich gelagert, während neben den Losbacken 44 auf der Welle 46 angeordnete Stellringe 53 feststellbar sind. Eine etwa in der Mitte des Messerrahmens 42 angeordnete Festbacke 43 ist breiter ausgebildet und besitzt anstelle der Bohrung 49 eine Gewindebohrung 54, in die eine mit der Welle 46 fest verbundene Gewindemuffe 55 eingreift.

Durch einfaches Drehen der Welle 46 an dem Knauf 56 wird der Messerrahmen 42 beim Einsetzen in den Trägerrahmen 41 verriegelt. Das Ende 48 der Welle 46 schiebt sich dabei in die Bohrung 51 und gegebenenfalls gegen einen (nicht eingezeichneten) Anschlag, während der Hals 57 in die Aussparung 49 eingreift. Gleichzeitig werden die auf der Welle 46 feststehenden Stellringe 53 axial bewegt und die Losbacken 44 gegen die vorher auseinanderstehenden schwach auswärts gewölbten Einzelmesser der Messerpaare 32 gedrückt. Die Messerrahmen 42 sind jetzt an jeweils vier Punkten in dem Trägerrahmen 41 sicher gehaltert und die Messerführungen 43, 44 geschlossen. Die Messer 30, 31 werden bis auf ein mittels der Stellringe 53 rasch nachjustierbares Laufspiel optimal geführt. Dreht man die Welle 46 an dem Knauf 56 in die entgegengesetzte Richtung werden die Messerführungen 43, 44 geöffnet und die schwach nach außen gewölbten Messer 30, 31 drücken sich aufgrund ihrer Vorspannung auseinander. Ein Stellring 58 verhindert ein vollständiges Herausdrehen der Gewindemuffe 55 aus dem Gewinde 54. Der Messerrahmen 42 ist entriegelt und kann aus dem Trägerrahmen 41 entnommen werden.

Die ausgebauten Messerrahmen 42 können nun z.B. in einer Spülmaschine gereinigt werden. Durch den größeren Abstand zwischen den Einzelmessern der Messerpaare 32 lassen sich selbst geringste Verschmutzungen beseitigt. Eine Änderung des Schnittrasterabstandes ist durch einfaches Austauschen der Messerrahmen 42 schnell und einfach möglich. Zum Ein- und Ausbauen der Messerrahmen 42 werden diese zweckmäßigerweise mit dem Transportband 70 unter den Trägerrahmen 41 gefahren. Durch Absenken des Trägerrahmens 41 greifen die Enden 47, 48 der Wellen 46 in die Aussparungen 49 bzw. in die Bohrungen 51 des Trägerrahmens ein und der Messerrahmen 42 kann nach dem Verriegeln angehoben werden.

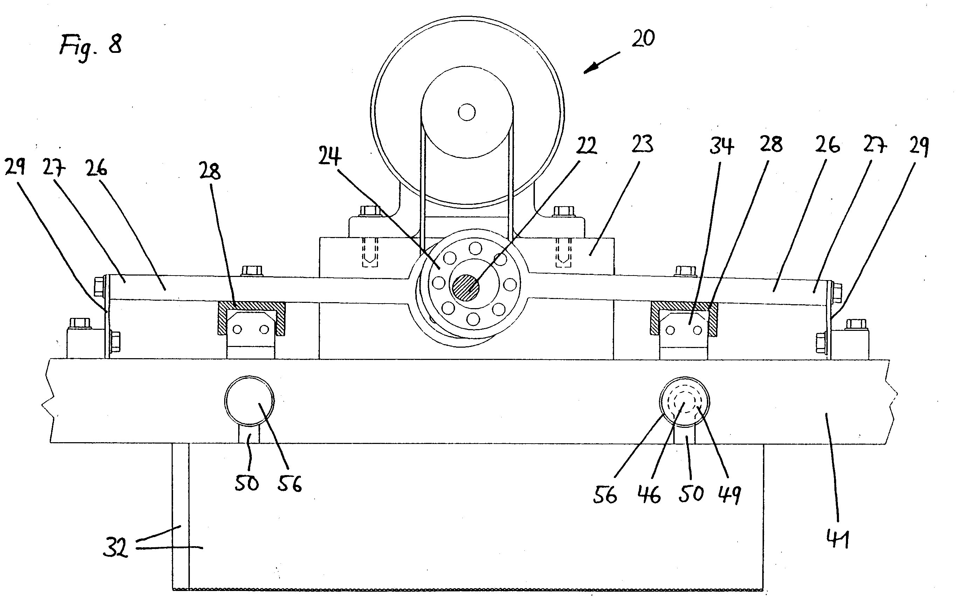

Um die Messer 30, 31 in den Messerführungen 43, 44 hin und her zu bewegen sind Rückenausleger 34 in Form einer Lasche vorgesehen, die jeweils in ein U-Profil 28 eingreifen (Fig. 8). Die Lasche 34 kann auch beispielsweise durch Punktschweißen an den Messern 30, 31 angebracht werden, so daß eine größere Druckfläche vorhanden ist. Die U-Profile 28 sind vorzugsweise aus Polyethylen gefertigt und an wenigstens zwei Pleuelstangen 26 befestigt, die mit Exzenterlagern 24 auf einer Exzenterwelle 22 gelagert sind. Die elastischen Eigenschaften des Polyethylens wirken sich günstig auf die Laufruhe aus und vermindert die Geräuschentwicklung. Zur Schwingungsdämpfung sind an den Enden 27 der Pleuelstangen 26 Federn 29 aus Leder befestigt. Leder hat ebenfalls eine hohe Elastizität und ist äußert reißfest.

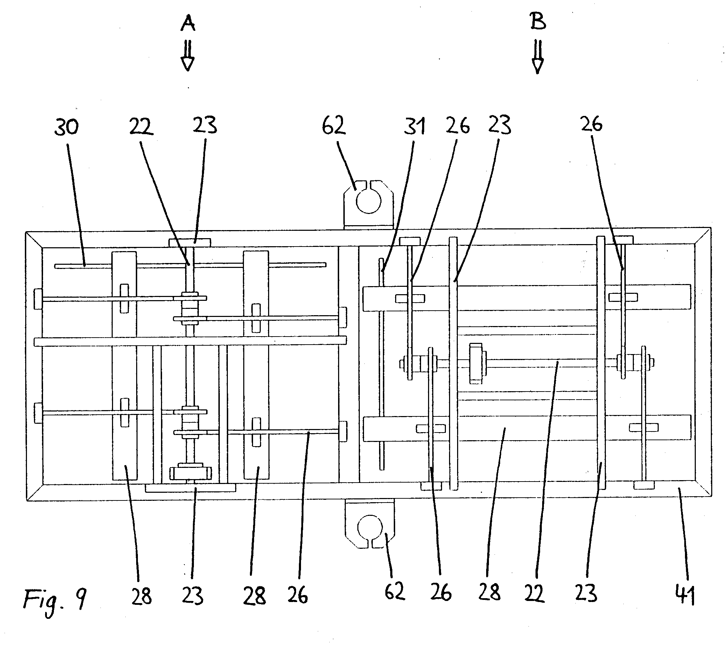

Fig. 9 zeigt den Trägerrahmen 41 mit den beiden Messerstationen A, B. In Längsrichtung L verläuft der Messersatz 30 der Station A, den der (nicht gezeichnete) Exzenterantrieb 20 über eine Exzenterwelle 22 bewegt, während der Messersatz 31 in der Station B mit dem gleichartig ausgebildeten (ebenfalls nicht gezeichneten) Exzenterantrieb 21 über seine Exzenterwelle 22 in Querrichtung Q bewegbar ist. Die Exzenterwellen 22 sind in Lagerplatten oder auf Lagerböcken 23 gelagert.

Im Gebrauch des Schneidautomaten 10 werden die mit gebackenem Kuchen K belegten Bleche 16 der Reihe nach mit ihrer offenen Randseite zum Bediener zeigend zwischen die Mitnehmernocken bzw. Querstege 73 der Transportbänder 70 eingelegt. Diese laufen synchron über Rollen 72 und werden von einem Bandantrieb 71 taktweise in Bewegung gesetzt (Fig. 2a, 2b, 2c). Seitenführungen 74 verhindern ein Auswandern nach außen. Alternativ kann auch ein zentral angeordnetes Transportband 70 verwendet werden.

Nach Auslösen der Zweihandbedienung läuft das Band bzw. die Bänder 70 an und befördern ein erstes Kuchenblech 16 durch eine mit (1) bezeichnete Position hindurch, worauf der Rollenschalter 76 das Band 40 in der Halteposition H anhält, so daß das eingelaufene Blech 16 sich in der Position (2) von Fig. 2b befindet. Der Bandantrieb 71 kann dabei mittels einer (nicht gezeichneten) Magnetbremse das Band 70 arretieren.

Hat der Rollenschalter 76 oder ein (nicht dargestellter) Näherungsschalter das Vorhandensein eines Blechs 16 in richtiger Position - z.B. also (2) in Fig. 2a - bestätigt, so wird die Abwärtsbewegung des Trägerrahmens 41 entlang einer Vertikal-Führung 62 (Fig. 4a, 4b) beispielsweise durch einen Druckzylinder 64 bewirkt, an dessen Kolben 65 ein Tragkreuz 66 befestigt ist (Fig. 1). Günstig ist es den Trägerrahmen mittels einer (nicht gezeigten) Schrittmotorsteuerung zu senken. Dadurch lassen sich, je nach Schneidgut, fein abgestufte Absenk-Geschwindigkeiten realisieren, wodurch - eventuell computergesteuert - optimale Schnittergebnisse gewährleistet sind.

Direkt über dem Schneidgut K wird der Exzenterantrieb 20 der Messerstation A in Lauf gesetzt, der die Messerpaare 32 des Messersatzes 30 hin und her bewegt. Haben sie den Kuchen K bis kurz vor dem Boden 16 durchdrungen, so verharren sie dort während einer steuerbaren Verweilzeit, bis der Schrittmotorantrieb den Messersatz 30 wieder in die obere Bereitschafts-Stellung zurückfährt (Fig. 4a). Unterwegs wird der Exzenterantrieb 20 abgeschaltet.

Eine (nicht dargestellte) Anzeige kann die nun bestehende Taktbereitschaft signalisieren. Nach Einlegen des nächsten Kuchenbleches 16 wird der nächste Arbeitstakt beidhändig ausgelöst. Hierbei laufen zwei Schneidvorgänge gleichzeitig ab: das neu eingebrachte Blech 16 wird in der Messerstation A unter Einschaltung des Antriebs 20 dem Längsschnitt unterzogen, während das Schneidgut K auf dem bereits einmal bearbeiteten ersten Blech 16 - jetzt in der Position (3) von Fig. 2b - in der Messerstation B mit Antrieb 21 durch Schnitt in Querrichtung Q fertigbearbeitet wird. Mit jedem Anheben des Messerrahmens 41 wird ein Arbeitstakt beendet und der nächste vorbereitet, so daß bei ununterbrochener Beschickung mit weiteren Blechen 16 jeweils ein Vorschnitt in Längsrichtung L sowie ein Fertigschnitt in Querrichtung Q erfolgt und das je vorderste Blech - Position (4) in Fig. 2b - ausgeschoben wird, z.B. auf einen (nicht gezeichneten) Ablagetisch.

Das Schneidgerät 10 arbeitet hygienisch und mit hoher Arbeitssicherheit, da nach dem Auslösen Schnitt und Transport unter einer (nicht dargestellten) Schutzhaube vollautomatisch, also ohne manuellen Eingriff ablaufen. Auf Blechen 16 der typischen Abmessungen 40 cm x 60 cm lassen sich in stufenlos regelbarem Betrieb rasch und sehr genau jeweils beispielsweise 42 gleichgroße Kuchenstücke mit einem umlaufenden Randverschnitt von nur 10 mm herstellen. Selbst angelernten Kräften sind Schnittleistungen von 500 Blechen pro Stunde ohne weiteres möglich. Am Auslauf-Ende der Förderstrecke 14 besteht auf der Bedienerseite offener Zugang zu den Blechen 16 mit der geschnittenen Ware.

Bei Betriebsende oder bei Wechsel des bearbeiteten Produkts kann ein mit einem aufgeklebten, z.B. mit einer Reinigungslösung getränkten Schwamm versehenes Reinigungsblech durch die Förderstrecke 14 unter die Messerstationen A, B geführt werden, um die eintauchenden Messersätze 30, 31 zu säubern. Dadurch, daß der Trägerrahmen 41 jenseits der Bereitschaftsstellung bei automatisch stillgesetzen Antrieben 20, 21 in eine seitliche oder höhere Wartungs-Position bewegbar ist, lassen sich die Messer 32 nachreinigen. Zur Desinfektion ist zweckmäßig eine zusätzliche Hochdruckspülung vorgesehen, etwa mit einem Wasserstoß. Eine besonders sorgfältige Reinigung ist nach Herausnehmen der Messerrahmen 42 aus dem Trägerrahmen 41 möglich. Die Einzelmesser der Messerpaare 32 haben dann einen vergrößerten Abstand voneinander, so daß Verunreinigungen bequem entfernt werden können.

Die Erfindung ist nicht auf die dargestellten und beschriebenen Ausführungsformen beschränkt, auch nicht auf die benutzten Anzahlen von Messerpaaren jedes Satzes 30, 31. Zahlreiche Abwandlungen sind möglich, beispielsweise eine zwei- oder mehrspurige Stations-Ausbildung.

Man erkennt, daß ein erfindungsgemäßer Aufbau eines Schneidgerätes 10 für namentlich auf Blechen 16 in eine Förderstrecke 14 einlaufendes nachgiebiges Schneidgut wie Kuchen K, flach ausgeformtes Creme- und Sahnegebäck o.dgl. über einem Gestell 12 wenigstens zwei Messerstationen A, B hintereinander haltert, die für wenigstens zwei Schneidrichtungen (L, Q; Winkel α) jeweils einen Satz 30, 31 parallel angeordneter Messer 32 in einem Trägerrahmen 41 aufweisen. Ihre Antriebe 20, 21 sind gleichzeitig oder unabhängig betätigbar. Die Einzelmesser paralleler Messerpaare 32 sind während eines von oben nach unten durch das Schneidgut K geführten Schnittes zueinander und zum jeweils benachbarten Messerpaar 32 gegenläufig hin und her bewegbar. Dazu sind Rückenausleger 34 der Messer 30, 31 über Exzenterwellen 22 eines Exzenterantriebs 20, 21 gleitgeführt. Die Messersätze 30, 31 sind im Trägerrahmen 41 oder in lösbar gehalterten Messerrahmen 42 aneinander anschließend z.B. unter 90° versetzt gehaltert. Ein Hub-/Senk-Antrieb 60 verfährt den Trägerrahmen 41 z.B. entlang zwei Vertikal-Führungen 62 zwischen einer oberen Bereitschafts-und einer unteren Arbeits-Stellung, für die eine bodennah wirksame Begrenzung vorgesehen ist, etwa ein Trägerrahmen-Anschlag oder eine Zeitsteuerung auch für eine Verweildauer. Der Antrieb der Messerpaare 32, deren Schneiden 33 selbstschärfend aneinander entlanggleiten, ist bei Berührung des Schneidgutes K einschaltbar und/oder beim Verlassen abschaltbar. Die außen mit einer Antihaftbeschichtung 39 versehenen Messer 32 können in beheizbaren Führungen 43,44 laufen.

### Legende

- α: Winkel
- A, B: Messerstationen
- H: Halteposition
- K: Kuchen
- L: Längsrichtung
- Q: Querrichtung
- 10: Schneidgerät
- 12: Gestell
- 14: Förderstrecke
- 16: Bleche
- 20, 21: (Exzenter-)Antrieb
- 22: Exzenterwelle
- 23: Lager
- 24: Exzenter, Nocken
- 25: Exzenterlager
- 26: Pleuel
- 27: Ende
- 28: U-Profil
- 29: Feder
- 30, 31: Messer
- 32: Messerpaar
- 33: Langloch
- 34: Rückenausleger
- 35: Lageröffnung
- 36: Laufbacken
- 38: Schneiden
- 39: Antihaftbeschichtung
- 40: Halterung
- 41: Trägerrahmen
- 42: Messerrahmen
- 43: Messerführung (Festbacke)
- 44: Messerführung (Losbacke)
- 45: Gleitstein
- 46: Welle
- 47, 48: Enden
- 49: Aussparung
- 50: Einführöffnung
- 51, 52: Bohrung
- 53: Stellring
- 54: Gewindebohrung
- 55: Gewindemuffe
- 56: Knauf
- 57: Hals
- 58: Anschlag
- 60: Hub-/Senkantrieb
- 62: Vertikal-Führung
- 64: Druckzylinder
- 65: Kolben
- 66: Tragkreuz
- 70: Transportband
- 71: Bandantrieb
- 72: Rollen
- 73: Bandstollen
- 74: Seitenführung
- 75: Lichtschranke
- 76: Rollenschalter

## Patentansprüche

1. Schneidgerät (10) für namentlich auf Blechen (16) transportiertes nachgiebiges Schneidgut wie Kuchen (K), flach ausgeformtes Creme- und Sahnegebäck o.dgl., mit einem Gestell (12), das eine Halterung (40) mit einem Satz motorisch angetriebener, abstandsgleich angeordneter Messerpaare (30, 31) trägt, die parallel zueinander von oben nach unten durch das Schneidgut (K) geführt und nach dem Schnitt aufwärts herausgezogen werden, wobei die Einzelmesser (32) jedes Messerpaares (30, 31) während eines Schnittes zueinander gegenläufig hin und her bewegbar sind und dabei aneinander entlanggleiten, dadurch **gekennzeichnet**, daß sich oberhalb einer Förderstrecke (14), auf der die Bleche (16) mit Schneidgut (K) ein- und ablaufen, wenigstens zwei Messerstationen (A, B) hintereinander befinden, die für den Schnitt in wenigstens zwei Richtungen (L; Q) jeweils einen Satz paralleler Messerpaare (30, 31) aufweisen, die in einem Winkel (α) zueinander stehen, z.B. unter 90° oder 60°, und daß die Messerpaare (30, 31) jeweils zwischen Messerführungen (43, 44) verschieblich gelagert sind, wobei die Einzelmesser (32) jeweils Rückenausleger (34) mit Lageröffnungen (35) zur Aufnahme von Exzenterlagern (25) aufweisen.

2. Gerät nach Anspruch 1, dadurch **gekennzeichnet**, daß die Messerstationen (A, B) in einem gemeinsamen Trägerrahmen (41) angeordnet, mit je einem Antrieb (20, 21) versehen und wahlweise gleichzeitig oder unabhängig betätigbar sind.

3. Gerät nach Anspruch 2, dadurch **gekennzeichnet**, daß die Antriebe (20, 21) der Messerstationen (A, B) Exzenterantriebe mit Exzenterwellen (22) sind.

4. Gerät nach Anspruch 2 oder 3, dadurch **gekennzeichnet**, daß die Messerführungen (43, 44) in dem Trägerrahmen (41) aneinander anschließend winkelversetzt gehaltert sind, bevorzugt unter 90° derart, daß ein Messersatz (z.B. 30) parallel zur Blech-Längsrichtung (L) und ein Messersatz (31) quer dazu steht.

5. Gerät nach Anspruch 4, dadurch **gekennzeichnet**, daß die Messerführungen (43, 44) am Trägerrahmen (41) abstandsgleich befestigt sind.

6. Gerät nach Anspruch 4 oder 5, dadurch **gekennzeichnet**, daß die Messerführungen (43, 44) in wenigstens zwei Messerrahmen (42) aneinander anschließend winkelversetzt gehaltert sind, bevorzugt unter 90° derart, daß ein Messersatz (z.B. 30) parallel zur Blech-Längsrichtung (L), und ein Messersatz (31) quer dazu steht und daß die Messerrahmen (42) lösbar mit dem Trägerrahmen (41) verbunden sind.

7. Gerät nach Anspruch 6, dadurch **gekennzeichnet**, daß die Messerführungen (43) an den Messerrahmen (42) vorzugsweise abstandsgleich befestigt und die ihnen jeweils gegenüberliegend zugeordneten Messerführungen (44) bevorzugt auf wenigstens zwei Wellen (46) verschieblich angeordnet sind.

8. Gerät nach Anspruch 6 oder 7, dadurch **gekennzeichnet**, daß die Messer (30, 31) Rückenausleger (34) in Form einer Lasche aufweisen, die jeweils in ein U-Profil (28), z.B. aus Polyethylen, eingreifen.

9. Gerät nach einem der Ansprüche 6 bis 8, dadurch **gekennzeichnet**, daß der Trägerrahmen (41) mit einem regelbaren Hub-/Senk-Antrieb (60) zwischen einer oberen Bereitschafts- und einer unteren Arbeits-Stellung verfahrbar ist (Fig. 1, 4a, 4b), z.B. entlang zwei oder vier Vertikal-Führungen (62).

10. Gerät nach Anspruch 9, dadurch **gekennzeichnet**, daß der Trägerrahmen (41) jenseits der oberen Bereitschafts-Stellung in eine seitliche oder höhere Wartungs-Position bewegbar ist.

11. Gerät nach Anspruch 9 oder 10, dadurch **gekennzeichnet**, daß für die untere Arbeitsstellung eine bodennah wirksame Begrenzung vorgesehen ist, z.B. in Form eines Trägerrahmen-Anschlags oder einer Zeitsteuerung für den Hub-/Senk-Antrieb (60), die außerdem eine Verweildauer für die untere Endstellung festlegt.

12. Gerät nach einem der Ansprüche 1 bis 11, dadurch **gekennzeichnet**, daß die Förderstrecke (14) insbesondere elektronische Steuermittel zum positionsgerechten Einführen des jeweils zu bearbeitenden Blechs (16), sein Festhalten während eines Arbeitstaktes und sein Weiterfördern aufweist.

13. Gerät nach Anspruch 12, dadurch **gekennzeichnet**, daß auf der Förderstrecke (14) eine Einrichtung (75) zum Anhalten eines Transportbandes (70) vorhanden ist, das z.B. mittels einer Magnetbremse während des Arbeitstaktes arretierbar ist.

14. Gerät nach einem der Ansprüche 1 bis 13, dadurch **gekennzeichnet**, daß eine Zweihand-Bedienung für das Auslösen des Anlaufs der Förderstrecke (14) und des Arbeitstaktes vorhanden ist.

15. Gerät nach einem der Ansprüche 2 bis 14, dadurch **gekennzeichnet**, daß der Antrieb (20, 21) der Messersätze (30, 31) bei Berührung des Schneidgutes (K) einschaltbar und/oder beim Verlassen des Schneidgutes (K) abschaltbar ist.

16. Gerät nach einem der Ansprüche 1 bis 15, dadurch **gekennzeichnet**, daß die Einzelmesser jedes Paares (32) mit ihren Schneiden (38) selbstschärfend aneinander entlanggleiten.

17. Gerät nach Anspruch 16, dadurch **gekennzeichnet**, daß die Einzelmesser jedes Paares (32) schwach auswärts gewölbt sind und daß die Schneiden (38) einen inneren, insbesondere planen Reibungsbereich aufweisen.

18. Gerät nach Anspruch 16 oder 17, dadurch **gekennzeichnet**, daß die Messer (32) zumindest an ihren äußeren Gleitflächen eine Antihaftbeschichtung (39) tragen, z.B. einen Belag aus Polyfluortetraethylen (PFTE = Teflon).

19. Gerät nach einem der Ansprüche 16 bis 18, dadurch **gekennzeichnet**, daß die einander zugewandten Einzelmesser jeweils benachbarter Messerpaare (32) gegenläufig angetrieben sind.

20. Gerät nach einem der Ansprüche 1 bis 19, dadurch **gekennzeichnet**, daß die Messerstationen (A, B) beheizbare Führungen (43, 44) für die Messer (32) aufweisen.

## Claims

1. A cutting device (10), namely for flexible cutting material transported on sheets (16), for instance cakes (K), flat-shaped cream and whipped-cream pastries, or the like, comprising a frame (22) carrying a mounting (40) including a set of motor-driven, equidistantly arranged pairs of knives (30, 31) which are guided in parallel with one another from the top to the bottom through said cutting material (K) and are upwardly removed after cutting, the individual knives (32) of each pair of knives (30, 31) being oppositely movable backwards and forwards during a cut, thereby sliding along one another,
**characterized** in that at least two knife stations (A, B) are positioned one after the other above a conveyor path (14) on which said sheets (16) with said cutting material (K) enter and exit, and each of said knife stations (A, B) comprises a set of parallel pairs of knives (30, 31) for cutting in at least two directions (L; Q), said pairs of knives (30, 31) being at an angle (α) to one other, e.g. at 90° or 60°, and that said pairs of knives (30, 31) are each displaceably supported between knife guides (43, 44), said individual knives (32) being each provided with back extensions (34) including bearing openings (35) for receiving eccentric bearings (25).

2. The device according to claim 1,
**characterized** in that said knife stations (A, B) are arranged within a joint support frame (41), are each provided with a drive (20, 21) and can be selectively operated simultaneously or independently.

3. The device according to claim 2,
**characterized** in that the drives (20, 21) of said knife stations (A, B) are eccentric drives having eccentric shafts (22).

4. The device according to claim 2 or 3,
**characterized** in that said knife guides (43, 44) are retained in said support frame (41) successively at offset angles, preferably at 90°, in such a manner that one set of knives (e.g 30) is parallel to the longitudinal sheet direction (L) and one set of knives (31) is positioned in a direction transverse thereto.

5. The device according to claim 4,
**characterized** in that said knife guides (43, 44) are equidistantly secured to said support frame (41).

6. The device according to claim 4 or 5,
**characterized** in that said knife guides (43, 44) are retained in at least two knife frames (42) successively at offset angles, preferably at 90°, in such a manner that one set of knives (e.g. 30) is in parallel with the longitudinal sheet direction (L) and one set of knives (31) is positioned in a direction transverse thereto, and that said knife frames (42) are detachably connected to said support frame (41).

7. The device according to claim 6,
**characterized** in that said knife guides (43) are preferably equidistantly secured to said knife frame (42) and said knife guides (44) arranged respectively opposite thereto are movably disposed, preferably on at least two shafts (46).

8. The device according to claim 6 or 7,
**characterized** in that said knives (30, 31) comprise back extensions (34) in the form of a bracket which respectively engage into a U-shaped profile (28) made, e.g., of polyethylene.

9. The device according to any of claims 6 to 8,
**characterized** in that said support frame (41) is movable with a controllable lifting/lowering drive (60) between an upper stand-by position and a lower working position (Figs. 1, 4a, 4b), e.g. along two or four vertical guides (62).

10. The device according to claim 9,
**characterized** in that beyond the upper stand-by position said support frame (41) is movable into a lateral or raised maintenance position.

11. The device according to claim 9 or 10,
**characterized** in that for the lower working position there is provided a limitation means which is operative near the bottom, e.g. in the form of a support frame stop or a time control for the lifting/lowering drive (60) which also defines a dwell time for the lower end position.

12. The device according to any of claims 1 to 11,
**characterized** in that said conveyor path (14) comprises, in particular, electronic control means for introducing the sheet (16) to be respectively worked in the correct position, for retaining the sheet during a working cycle and for further conveying the same.

13. The device according to claim 12,
**characterized** in that said conveyor path (14) has provided thereon a means (75) for stopping a transportation belt (70) which can be arrested, e.g., by means of a magnetic brake during said working cycle.

14. The device according to any of claims 1 to 13,
**characterized** in that a two-hand operation is provided for initiating start of said conveyor path (14) and said working cylce.

15. The device according to any of claims 2 to 14,
**characterized** in that the drive (20, 21) of said sets of knives (30, 31) can be switched on upon contact with said cutting material (K) and/or can be switched off when said cutting material (K) is left.

16. The device according to any of claims 2 to 15,
**characterized** in that the individual knives of each pair (32) slide along one another with their cutting edges (38) in self-sharpening fashion.

17. The device according to claim 16,
**characterized** in that the individual knives of each pair (32) are curved slightly outwardly and that said cutting edges (38) have an inner, especially plane friction portion.

18. The device according to claim 16 or 17,
**characterized** in that said knives (32) have an antiadhesive coating (39), at least on their outer sliding surfaces, e.g. a coating of polyfluorotetraethylene (PFTE = Teflon).

19. The device according to any of claims 16 to 18,
**characterized** in that the individual knives of respectively adjacent pairs of knives (32) which face one another are oppositely driven.

20. The device according to any of claims 1 to 19,
**characterized** in that said knive stations (A, B) have heatable guides (43, 44) for said knives (32).

## Revendications

1. Appareil de coupe (10) pour une matière à couper souple telle que du gâteau (K), des pâtisseries de forme plate à la crème (Chantilly) ou autres, transportée notamment sur des plaques à pâtisserie (16), avec un bâti (12) portant un support (40) avec un lot de paires de lames équidistantes (30, 31) et entraînées par moteur, que l'on fait passer, parallèlement entre elles, du haut vers le bas à travers la matière à couper (K) et que l'on retire vers le haut après la coupe, les lames individuelles (32) de chaque paire de lames (30, 31) pouvant être déplacées pendant la coupe en mouvements de va-et-vient opposés et glissant en même temps l'une le long de l'autre, **caractérisé** par le fait qu'au-dessus d'une voie de transport (14), sur laquelle rentrent et ressortent les plaques à pâtisserie (16) avec la matière à couper (K), il y a au moins deux stations de lames (A, B) qui se succèdent et qui ont pour la coupe en au moins deux directions (L, Q) un lot respectif de paires de lames parallèles (30, 31) qui forment un angle (α) de par exemple 90° ou 60°, et que les paires de lames (30, 31) sont logées de manière coulissable entre des guidages respectifs des lames (43, 44), les lames individuelles (32) ayant respectivement des volets dorsaux (34) avec des ouvertures de palier (35) pour recevoir des paliers d'excentrique (25).

2. Appareil selon la revendication 1, **caractérisé** par le fait que les stations de lames (A, B) sont disposées dans un cadre porteur commun (41) et pourvues d'un dispositif d'entraînement respectif (20, 21), et qu'elles peuvent être actionnées au choix simultanément ou séparément.

3. Appareil selon la revendication 2, **caractérisé** par le fait que les dispositifs d'entraînement (20, 21) des stations de lames (A, B) sont des entraînements d'excentrique avec des arbres d'excentrique (22).

4. Appareil selon la revendication 2 ou 3, **caractérisé** par le fait que les guidages des lames (43, 44) sont logés dans le cadre porteur (41), l'un après l'autre et décales angulairement de préférence de 90°, de manière à ce qu'un lot de lames (par exemple 30) soit parallèle à la direction longitudinale (L) de la plaque à pâtisserie, et qu'un lot de lames (31) soit transversal à cette direction.

5. Appareil selon la revendication 4, **caractérisé** par le fait que les guidages de lames (43, 44) sont fixés à distance égale sur le cadre porteur (41).

6. Appareil selon la revendication 4 ou 5, **caractérisé** par le fait que les guidages de lames (43, 44) sont logés dans au moins deux cadres de lames (42) successifs et décalés angulairement, de préférence de 90°, de manière à ce qu'on lot de lames (par ex. 30) soit parallèle à la direction longitudinale (L) de la plaque à pâtisserie et qu'un lot de lames (31) soit transversal à cette direction, et que les cadres de lames (42) sont fixés de manière amovible au cadre porteur (41).

7. Appareil selon la revendication 6, **caractérisé** par le fait que les guidages de lames (43) sur les cadres de lames (42) sont fixés de préférence à distance égale et que les guidages correspondants des lames (44) en face d'eux sont disposés de préférence de manière coulissable sur au moins deux arbres (46).

8. Appareil selon la revendication 6 ou 7, **caractérisé** par le fait que les lames (30, 31) ont des volets dorsaux (34) en forme de languettes, pénétrant dans un profilé en U respectif (28), par exemple en polyéthylène.

9. Appareil selon une des revendications 6 à 8, **caractérisé** par le fait que le cadre porteur (41), à l'aide d'un dispositif de soulèvement et d'abaissement réglable (60), peut être déplacé entre une position supérieure d'attente et une position inférieure de travail (figures 1, 4a, 4b), le long de deux ou quatre guidages verticaux (62).

10. Appareil selon la revendication 9, **caractérisé** par le fait que le cadre porteur (41), au-delà de la position supérieure d'attente, peut être déplacé vers le côté ou vers le haut en une position de maintenance.

11. Appareil selon la revendication 9 ou 10, **caractérisé** par le fait qu'une limitation devenant effective à proximité du fond est prévue pour la position inférieure de travail, par exemple sous forme d'une butée du cadre porteur ou d'une commande temporisée pour le dispositif de soulèvement et d'abaissement (60), qui fixe en outre un temps de stationnement à la position finale inférieure.

12. Appareil selon une des revendications 1 à 11, **caractérisé** par le fait que la voie de transport (14) a notamment des moyens de commande électroniques pour l'arrivée en position correcte de la plaque à pâtisserie respective (16) devant être traitée, pour son arrêt pendant une opération de travail, et pour la continuation de son transport.

13. Appareil selon la revendication 12, **caractérisé** par le fait qu'il y a sur la voie de transport (14) un dispositif (75) pour stopper une bande transporteuse (70) qui peut par exemple être bloquée au moyen d'un frein magnétique pendant l'opération de travail.

14. Appareil selon une des revendications 1 à 13, **caractérisé** par le fait qu'il y a une commande à deux mains pour déclencher le démarrage de la voie de transport (14) et de l'opération de travail.

15. Appareil selon une des revendications 2 à 14, **caractérisé** par le fait que le dispositif d'entraînement (20, 21) des lots de lames (30, 31) peut être mis en circuit au moment du contact de la matière à couper (K), et/ou hors circuit au moment de la sortie de la matière à couper (K).

16. Appareil selon une des revendications 1 à 15, **caractérisé** par le fait que les tranchants (38) des lames individuelles de chaque paire (32) glissent l'un contre l'autre de manière à s'affuter automatiquement.

17. Appareil selon la revendication 16, **caractérisé** par le fait que les lames individuelles de chaque paire (32) sont légèrement voutées vers l'extérieur, et que les tranchants (38) ont un secteur intérieur de frottement, notamment plane.

18. Appareil selon la revendication 16 ou 17, **caractérisé** par le fait que les lames (32) portent au moins sur leurs surfaces extérieures de glissement un revêtement antiadhésif (39), par exemple un revêtement de polyfluortétraéthylène (PFTE = téflon).

19. Appareil selon une des revendications 16 à 18, **caractérisé** par le fait les lames individuelles, tournées l'une vers l'autre et appartenant aux paires de lames (32) respectivement voisines, sont entraînées en sens opposé.

20. Appareil selon une des revendications 1 à 19, **caractérisé** par le fait que les stations de lames (A, B) ont des guidages (43, 44) de lames (32) pouvant être chauffés.
